# EUROPEAN PATENT SPECIFICATION

(11) **EP 3 090 821 B1**
(45) Date of publication and mention of the grant of the patent: **15.11.2017**
(21) Application number: 15862136.7
(22) Date of filing: 30.04.2015
(51) Int. Cl.: B22F 3/16, B22F 8/00, H01F 1/057, C22C 38/00, H01F 1/06, H01F 1/08, H01F 41/02, B22F 9/00

(54) **METHOD FOR PREPARING NEODYMIUM-IRON-BORON MAGNET BY UTILIZING WASTE MATERIAL**
VERFAHREN ZUR HERSTELLUNG VON NEODYM-EISEN-BORMAGNET MITTELS ABFALLSTOFFEN
PROCÉDÉ PERMETTANT LA PRÉPARATION D'AIMANT EN NÉODYME-FER-BORE PAR L'UTILISATION DE DÉCHETS

(30) Priority: 08.03.2015 CN 201510101336
(43) Date of publication of application: 09.11.2016
(73) Proprietor: Beijing University Of Technology, Beijing 100124 (CN); Anhui Earth-Panda Advance Magnetic Material Co., Ltd., Hefei Anhui Province (CN)
(72) Inventor: YUE, Ming, Beijing 100124 (CN); LI, Xiantao, Beijing 100124 (CN); LIU, Weiqiang, Beijing 100124 (CN); LI, Meng, Beijing 100124 (CN); LIU, Min, Beijing 100124 (CN); ZHANG, Dongtao, Beijing 100124 (CN); YIN, Xiaowen, Beijing 100124 (CN); HUANG, Xiulian, Beijing 100124 (CN); CHEN, Jingwu, Beijing 100124 (CN); YI, Xiaofei, Beijing 100124 (CN)
(74) Representative: Sun, Yiming
(86) International application number: PCT/CN2015/077938
(87) International publication number: WO 2016/141625

(56) References cited:
- CN-A- 102 211 192
- CN-A- 103 117 143
- CN-A- 103 317 146
- CN-A- 103 882 234
- CN-A- 103 882 234
- CN-A- 104 036 947
- CN-A- 104 036 949
- CN-A- 104 036 949
- CN-A- 104 190 943
- JP-A- 2002 356 724
- US-A- 4 894 097
- US-A- 5 183 494
- RAM S: "Synthesis, magnetic properties and formalism of magnetic properties of high-quality refined Nd2Fe14B powders for permanent magnet devices", JOURNAL OF MATERIALS SCIENCE, KLUWER ACADEMIC PUBLISHERS, BO, vol. 32, no. 15, 1 January 1997 (1997-01-01), pages 4133-4148, XP019209182, ISSN: 1573-4803, DOI: 10.1023/A:1018666227176

## Description

### TECHNICAL FIELD

This present disclosure relates to a recycling technology field of NdFeB sludge, and more particularly to short process preparation technology of sintered NdFeB magnets from NdFeB sludge.

### BACKGROUND

Compared to other magnetic materials, NdFeB magnetic materials have excellent magnetic and mechanical properties. Therefore, they have been applied in many fields, such as electronic information, household appliances, medical treatment, aerospace, and especially in the new green energy fields of energy conservation vehicles and wind power. These wide application fields also bring the rapid increase in annual output of NdFeB magnets. Consequently, the NdFeB wastes, including the scraps and sludge that are generated during the manufacture processes, are about 30 wt. % of the as-sintered materials. China, for example, as the largest manufacturer of NdFeB magnets, had an annual output of about 94 thousand tons in 2013, which accounted for 91% of the global output. At the same time, about 20-30 thousand tons of NdFeB raw materials were formed into sludge during the production process. With the development of global environmental legislation, as well as the requirement of resources protection and sustainable development, the recycling of waste NdFeB materials has become very important. As the price of rare-earth metals and the fabrication costs have increased over the years, the green and efficient recycling of waste NdFeB materials could not only protect the environment and save resources, but also bring substantial economic and social benefits.

At the present time, possible routes to recycle scraps of sintered NdFeB magnets are: (1) Hydrogen decrepitation to get powders, followed by coating with rare earth rich powders, alignment, and bonding or hot pressing into bulk magnets; (2) Hydrogenation, disproportionation, desorption, recombination (HDDR) process to obtain high coercivity powders for bonding or hot pressing; (3) Milling, alignment, and vacuum sintering into bulk magnets; (4) The powders could be blended with other fresh powders and processed by one of the ways above, but the magnetic properties would drop accordingly.

On the other hand, the recycle technology of NdFeB rare earth permanent magnet sludge waste is currently a hydrometallurgical process. These processes are comprised of the following: acid dissolution-precipitation process, complex salt conversion process, hydrochloric acid dissolved superior process, and full extraction processes. Various methods are briefly compared as follows: (1) Acid dissolution-precipitation process: This process belongs to relatively primitive methods. Main procedures include oxidizing roasting, acid decomposition, precipitation, burning to achieve rare earth oxides, subsequently electrolyzing rare earth fluoride to prepare pure metal. The recovery rate of rare earth oxides in batch production is low. (2) Hydrochloric acid dissolved superior process: This process is divided into oxide roasting, decomposition and purification, extraction and separation, and sedimentation burning. The recovery rate of rare earth is more than 95%, the purity of Dy₂O₃ is 99%, and the purity of Pr₂O₃ is 98% by this method. Furthermore, the raffinate can achieve precipitate of rare earth carbonate polymorphs which can meet customers' demands. (3) Sulfuric acid complex salt precipitation process: This process typically includes the following steps: sulfuric acid dissolution, complex salt precipitation of rare earths, alkali conversion, hydrochloric acid dissolution, extraction and separation, precipitation, and burning to obtain rare earth oxides. Complex salt conversion process could separate Nd₂O₃ and non-rare earth (Fe, Al, etc.). By this method, the purity of rare earth oxides could reach 93%. The recovery rate of Nd₂O₃ in final product is high (up to 85.53%), and the purity of Nd₂O₃ and Dy₂O₃ is 99%. Therefore, this process is widely used in the industry nowadays. (4) Full extraction process. Full solvent extraction processes of NdFeB waste are: extraction of iron by N₅₀₃, extraction of rare earth by P₅₀₇, separation of neodymium and dysprosium, further purification of cobalt. After 60 levels segment extraction test, Nd₂O₃ with 99% purity, Dy₂O₃ with 98% purity, and cobalt carbonate product with 99% purity are achieved. However, this process needs more steps and a longer production cycle. The final products of above process are rare earth oxide or metal, and the above-mentioned processes have common disadvantages of long flow, generation of a large amount of waste acid that pollutes the environment.

To solve these problems, China patent (Application No. 201410101544.7) disclosed a method for preparing the recycled NdFeB magnetic powders form NdFeB sludge. By this method, NdFeB powders could be obtained from the NdFeB sludge, but the resultant magnetic powders did not have the desired magnetic properties and cannot be directly used in applications.

CN 104 036 949 A discloses a method for using bulk sintered neodymium iron boron (NdFeB) machining waste to prepare a high-coercivity regenerated NdFeB magnet and belongs to the technical field of magnetic materials. CN 103 882 234 A discloses a method for preparing regenerated neodymium iron boron magnetic powder by using neodymium iron boron oily sludge, and belongs to the technical field of recovering and recycling of the neodymium iron boron oily sludge. CN 104 190 943 A discloses a method for recycling sintered neodymium-iron-boron waste materials. Ram S. describes synthesis, magnetic properties and formalism of magnetic properties of high-quality refined Nd2Fe14B powders for permanent magnet devices (Journal of Materials Science (1997), 32(15); 4133-4148).

### DISCLOSURE OF THE INVENTION

The present invention overcomes the disadvantages in the existing technology and fabricates sintered NdFeB magnets with good magnetic properties by optimizing and adjusting the process. Waste NdFeB sludge was chosen as the raw materials. After the organic impurities were removed by distillation and ultrasonic cleaning, the recycled NdFeB powders were prepared by calcium reduction-diffusion reaction followed by rinsing. During the rinsing process, calcium oxide and non-magnetic materials were effectively separated by ultrasonic treatment in a magnetic field. The reduction process can also be improved by using CaH₂. Doping with Nd₂O₃ powders was beneficial in obtaining NdFeB powders with high performance. The recycled NdFeB powders with particle sizes of about 10 µm could significantly reduce energy consumption during the ball milling powders. The maximum magnetic energy product of recycled sintered NdFeB magnets by rare earth hydride nanoparticles doping was 35.26 MGOe, similar to those of current sintered NdFeB products. The invention has innovations of short process (NdFeB sludge as raw materials is directly fabricated into NdFeB powders and sintered magnets), high efficiency (the recycled magnets have good magnetic properties), environmental protection (preparation process does not produce waste acid, waste liquid and waste gas).

The present invention comprises the following steps: water bath distillation of sludge, ultrasonic cleaning, calcium reduction and diffusion, ultrasonic rinsing in the magnetic field, drying, powders mixing and sintering:
(1) Water bath distillation of sludge: Distilled water was added into the sludge with an optimized volume ratio of 1:15 between sludge and distilled water and stirred. Subsequently, water bath distillation with stepwise increasing temperature in vacuum was carried out to obtain the powders. The optimized procedure started from 30 °C to 80 °C with increments of 5 °C in the intervals of 5-10 min until the internal liquid had evaporated. The operation was repeated for 3 times.
(2) Ultrasonic cleaning for sludge: The distillation powders after the step (1) were washed for 3 times by acetone in an ultrasonic vessel, followed by ultrasonic cleaning in ethanol. After removal of the liquid, the wet powders were dried (e.g. under vacuum conditions at 50 °C) to obtain the pretreatment powders. The optimized ratio of powders, acetone and ethanol was 5 g, 10 ml and 10 ml, respectively.
(3) Calcium reduction-diffusion: The pretreatment powders after the step (2), with an appropriate amount of Nd₂O₃, FeB, and CaH₂ as the reactant, as well as CaO as a dispersant, were carried out using the calcium reduction diffusion reaction, wherein the pretreatment powders after step (2) were analyzed by x-ray fluorescence (XRF). Based on XRF results and calculation in accordance with RE₂Fe₁₄B stoichiometric ratio, Nd₂O₃, FeB, CaH₂ and CaO powders should be added before reaction. Nd₂O₃ was added to make sure that the amount of rare earth was 40 wt. % of in mixed powders of pretreatment powders, Nd₂O₃, and FeB; FeB was added to make sure that the amount of B in mixed powders of pretreatment powders, Nd₂O₃, and FeB was in excess 0-10 wt. % of that in RE₂Fe₁₄B compound (i.e., the amount of B in the mixed powders of pretreatment powders, Nd₂O₃, and FeB was in excess 0-10 wt. % of that in RE₂Fe₁₄B compound. For example, the weight percentage of B in RE₂Fe₁₄B was x wt. %, the weight percentage of B in mixed powders of pretreatment powders, Nd₂O₃, and FeB was x-(x+10) wt. %); The quantity of CaH₂ was 1.2-1.3 times as large as in the mixed powders; The quantity of CaO was 50 wt. % of CaH₂. Reduction diffusion reaction was carried out in 1160-1240 °C for 60-150 min in inert gas.
(4) Rinsing and drying: The reducing product after the step (3) was grinded, ultrasonically rinsed in a glass container in a magnetic field, and then dried. The reducing product was ultrasonically rinsed for 3 times with 15% glycerol aqueous solution in magnetic field of 0.1-0.5 T, then rinsed with water until the pH value of the supernatant reached 8-10, and finally was washed by ethanol and ether for 15 min, respectively. After rinsing, the product was dried in a vacuum of 10⁻³ Pa at 400 °C for 120 min to obtain the recycled NdFeB powders with particle sizes of about 10 µm. The optimized for each rinsing time was 15 min.
(5) Mixing powders and sintering: The resulting recycled NdFeB powders after the step (4) were milled to 3-5 µm, doped by rare earth hydride nanoparticles of 10-20 wt. %, and mixed; subsequently pressed and aligned in a magnetic field to get the green compact. The green compact was first dehydrogenated at 900-1000 °C for 30-180 min, and then sintered at 1050-1150 °C for 120-240 min, finally annealed at 850-950 °C for 60-180 min and 450-550 °C for 60-180 min, respectively. Thus the recycled sintered magnets were obtained.

The above-mentioned hydrides in step (5) were hydrogenated neodymium, hydrogenated praseodymium, hydrogenated dysprosium, or hydrogenated terbium.

The present invention chose NdFeB sludge as raw materials, and realized the recycling of NdFeB sludge. The preparation process did not produce waste acid, waste liquid and waste gas. The efficient and environmentally friendly process was short, therefore significantly reducing the fabrication cost of NdFeB magnets. The pretreatment sludge was directly prepared into NdFeB powders. The process took advantage of all valuable elements in the NdFeB sludge, and avoided the secondary waste during the recycling of sludge. After removing the calcium oxide by using magnetic ultrasonic rinse, the obtained NdFeB powders with particle sizes of about 10 µm facilitated the subsequent processing, which significantly reduced the energy consumption during the ball milling process. The recycled sintered magnets exhibited good maximum energy product [(BH)ₘₐₓ] of 35.26 MGOe.

### BRIEF DESCRIPTION OF THE DRAWINGS

FIG.1 shows the x-ray diffraction (XRD) pattern of the pretreatment sludge powders.
FIG.2 shows the XRD pattern of the recycled NdFeB powders.
FIG.3 shows the demagnetization curve of the recycled sintered NdFeB magnets.

### DETAILED DESCRIPTION OF THE PREFERRED EMBODIMENTS

The following examples describe this disclosure.

### Example 1

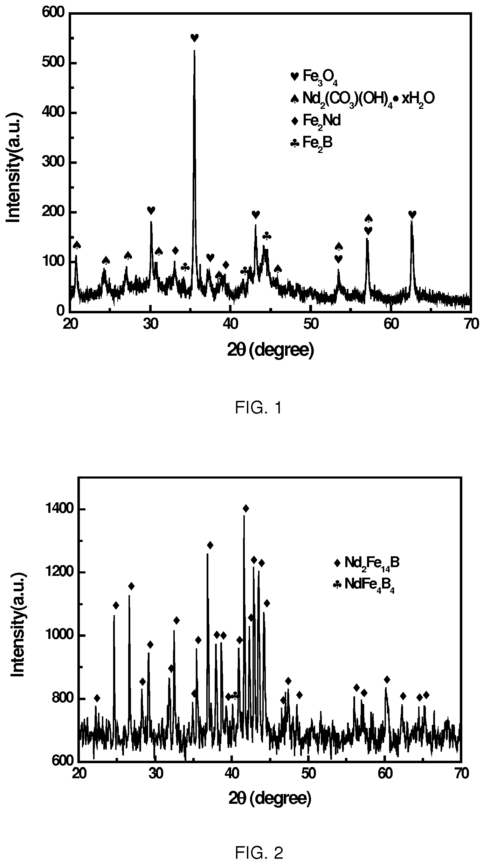

A NdFeB sludge of 30 ml with distilled water of 450 ml in a flask was distilled by rotary evaporator placed in a water bath under vacuum conditions. The procedure started from 30 °C to 80 °C with increments of 5 °C in the intervals of 5 min until the internal liquid had evaporated. The operation was repeated for 3 times. As a result, 26.42 g of distilled powders were obtained. The distillation powders were washed for 3 times by 52 ml of acetone in an ultrasonic vessel, and then were cleaned twice by ethanol in the ultrasonic vessel for 10 min. After removing the liquid, the wet powders were dried in vacuum at 50 °C to obtain the pretreatment powders. The XRD pattern and XRF results of the pretreatment powders are shown in FIG. 1 and TAB. 1, respectively. It was concluded that the pretreatment powders were mainly composed of Fe₃O₄, Nd(CO₃)(OH)₄•xH₂O, Fe2Nd and Fe2B.

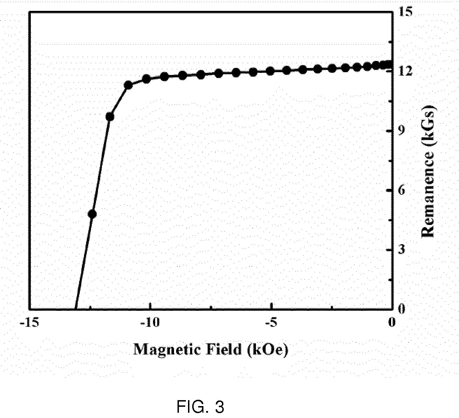

Based on the elemental content, shown in TAB. 1, and calculations in accordance with RE₂Fe₁₄B stoichiometric ratio, Nd₂O₃ was added to make sure that the amount of rare earth was 40 wt. % of mixed powders including pretreatment powders, Nd₂O₃ and FeB; FeB was added to make sure that the amount of B in the mixed powders was same as that in the RE₂Fe₁₄B compound; The quantity of CaH₂ was 1.2 times as large as the mixed powders; The quantity of CaO was 50 wt. % of CaH₂. The mixed powders were grinded homogeneously, wrapped in tantalum foil, and placed in a tube furnace. Reduction diffusion reaction was carried out at 1160 °C for 150 min in inert gas. After cooling to room temperature, the reducing product was grinded, ultrasonically rinsed for 3 times with 15% glycerol aqueous solution in a magnetic field of 0.5 T, then rinsed with water until the pH value of the supernatant reached 9.3, and finally was washed by ethanol and ether for 15 min, respectively. After rinsing, the product was dried in vacuum of 10⁻³ Pa at 400 °C for 120 min to obtain the recycled NdFeB powders with particle sizes of about 10 µm. The XRD patterns of the recycled NdFeB powders are shown in FIG. 2. The recycled NdFeB powders were mainly composed of Nd₂Fe₁₄B and a small amount of NdFe₄B₄ phase. The resulting recycled NdFeB powders were milled to about 5 µm, doped by hydrogenated neodymium nanoparticles of 15 wt. %, and mixed evenly; subsequently pressed and aligned in a magnetic field to obtain the compact. The green compact was first dehydrogenated at 900 °C for 120 min, and then sintered at 1100 °C for 180 min, finally annealed at 900 °C for 180 min and 480 °C for 120 min, respectively. The recycled sintered magnets exhibited good magnetic properties with the remanence (Bᵣ) of 12.36 kGs, the coercivity (H_{ci}) of 13.12 kOe, and maximum energy product [(BH)ₘₐₓ] of 35.26 MGOe, as shown in FIG. 3.

### Example 2

A NdFeB sludge of 30 ml with distilled water of 450 ml in a flask was distilled by rotary evaporator placed in a water bath under vacuum conditions. The procedure started from 30 °C to 80 °C with increments of 5 °C in intervals of 8 min until the internal liquid had evaporated. The operation was repeated for 2 times. As a result, 25.64 g of distilled powders were obtained. The distillation powders were washed for 3 times by 51 ml of acetone in an ultrasonic vessel, and then were cleaned for 1 time by ethanol in the ultrasonic vessel for 12 min. After removing the liquid, the wet powders were dried in vacuum at 50 °C to obtain the pretreatment powders. The XRF results of the pretreatment powders are shown in TAB. 2.

Based on the elemental content, shown in TAB. 2, and calculations in accordance with RE₂Fe₁₄B stoichiometric ratio, Nd₂O₃ was added to make sure that the amount of rare earth was 40 wt. % of mixed powders including the pretreatment powders, Nd₂O₃ and FeB; FeB was added to make sure that the amount of B in mixed powders was in excess of 5 wt. % of that in the RE₂Fe₁₄B compound; The quantity of CaH₂ was 1.25 times as large as the mixed powders; The quantity of CaO was 50 wt. % of CaH₂. The mixed powders were grinded homogeneously, wrapped in tantalum foil, and placed in a tube furnace. Reduction diffusion reaction was carried out at 1180 °C for 110 min in inert gas. After cooling to room temperature, the reducing product was grinded, ultrasonically rinsed for 3 times with 15% glycerol aqueous solution in a magnetic field of 0.3 T, then rinsed with water until the pH value of the supernatant reached 10, and finally was washed by ethanol and ether for 15 min, respectively. After rinsing, the product was dried in vacuum of 10⁻³ Pa at 400 °C for 120 min to obtain the recycled NdFeB powders with particle sizes of about 10 µm. The resulting recycled NdFeB powders were milled down to about 3 µm, doped by hydrogenated praseodymium nanoparticles of 10 wt. %, and mixed evenly; subsequently pressed and aligned in a magnetic field to obtain the compact. The green compact was first dehydrogenated at 950 °C for 100 min, and then sintered at 1050 °C for 240 min, finally annealed at 850 °C for 120 min and 450 °C for 180 min, respectively. The recycled sintered magnets exhibited good magnetic properties with remanence (Bᵣ) of 12.32 kGs, coercivity (H_{ci}) of 12.08 kOe, and maximum energy product [(BH)ₘₐₓ] of 35.45 MGOe.

### Example 3

A NdFeB sludge of 30 ml with distilled water of 450 ml in a flask was distilled by rotary evaporator placed in a water bath under vacuum conditions. The procedure started from 30 °C to 80 °C with increments of 5 °C in intervals of 10 min until the internal liquid had evaporated. The operation was repeated for 3 times. As a result, 25.26 g of distilled powders were obtained. The distillation powders were washed 3 times by 50.5 ml of acetone in an ultrasonic vessel, and then were cleaned for 2 times by ethanol in the ultrasonic vessel for 15 min. After removing the liquid, the wet powders were dried in vacuum at 50 °C to obtain the pretreatment powders. The XRF results of the pretreatment powders were shown in TAB. 3.

Based on the elemental content, shown in TAB. 3, and calculations in accordance with RE₂Fe₁₄B stoichiometric ratio, Nd₂O₃ was added to make sure that the amount of rare earth was 40 wt. % of the mixed powders including the pretreatment powders, Nd₂O₃ and FeB; FeB was added to make sure that the amount of B in mixed powders was in excess of 8 wt. % of that in the RE₂Fe₁₄B compound; The quantity of CaH₂ was 1.3 times as large as in the mixed powders; The quantity of CaO was 50 wt. % of CaH₂. The mixed powders were grinded homogeneously, wrapped in tantalum foil, and placed in a tube furnace. Reduction diffusion reaction was carried out at 1240 °C for 60 min in inert gas. After cooling to room temperature, the reducing product was grinded, ultrasonically rinsed for 3 times in a 15% glycerol aqueous solution in a magnetic field of 0.1 T, then rinsed with water until the pH value of supernatant reached 8, and finally was washed by ethanol and ether for 15 min, respectively. After rinsing, the product was dried in a vacuum of 10⁻³ Pa at 400 °C for 120 min to obtain the recycled NdFeB powders with particle sizes of about 10 µm. The resulting recycled NdFeB powders were milled down to 4 µm, doped by hydrogenated dysprosium nanoparticles of 20 wt. %, and mixed evenly; subsequently pressed and aligned in a magnetic field to obtain the compact. The green compact was first dehydrogenated at 1000 °C for 30 min, then sintered 1150 °C for 120 min, and finally annealed at 950 °C for 60 min and 550 °C for 60min, respectively. The recycled sintered magnets exhibited good magnetic properties with remanence (Bᵣ) of 11.15 kGs, coercivity (H_{ci}) of 18.36 kOe, and maximum energy product [(BH)ₘₐₓ] of 31.66 MGOe.

### Example 4

A NdFeB sludge of 30 ml with distilled water of 450 ml in a flask was distilled by rotary evaporator in water bath under vacuum conditions. The procedure started from 30 °C to 80 °C with increments of 5 °C in intervals of 10 min until the internal liquid had evaporated. The operation was repeated for 2 times. As a result, 25.64 g of distilled powders were obtained. The distilled powders were washed for 4 times by 51 ml of acetone in an ultrasonic vessel, and then cleaned for 2 times by ethanol in the ultrasonic vessel for 15 min. After removing the liquid, the wet powders were dried in vacuum at 50 °C to obtain the pretreatment powders. The XRF results of the pretreatment powders are shown in TAB. 4.

Based on the elemental content, shown in TAB. 4, and calculations in accordance with RE₂Fe₁₄B stoichiometric ratio, Nd₂O₃ was added to make sure that the amount of rare earth was 40 wt. % of the mixed powders including the pretreatment powders, Nd₂O₃ and FeB; FeB was added to make sure that the amount of B in mixed powders was in excess of 10 wt. % of that in the RE₂Fe₁₄B compound; The quantity of CaH₂ was 1.2 times as large as the mixed powders; The quantity of CaO was 50 wt. % of CaH₂. The mixed powders were grinded homogeneously, wrapped in tantalum foil, and placed in a tube furnace. Reduction diffusion reaction was carried out at 1200 °C for 100 min in inert gas. After cooling to room temperature, the reducing product was grinded, ultrasonically rinsed for 3 times with 15% glycerol aqueous solution in a magnetic field of 0.1 T, then rinsed with water until the pH value of supernatant reached 9, and finally was washed by ethanol and ether for 15 min, respectively. After rinsing, the product was dried in a vacuum of 10⁻³ Pa at 400 °C for 120 min to obtain the recycled NdFeB powders with particle sizes of about 10 µm. The resulting recycled NdFeB powders were milled down to 4 µm, doped by hydrogenated terbium nanoparticles of 10 wt. %, and mixed evenly; subsequently pressed and aligned in a magnetic field to get the compact. The green compact was first dehydrogenated at 1000 °C for 60 min, and then sintered at 1100 °C for 180 min, and finally annealed at 900 °C for 180 min and 480 °C for 120 min, respectively. The recycled sintered magnets exhibited good magnetic properties with remanence (Bᵣ) of 11.68 kGs, coercivity (H_{ci}) of 20.65 kOe, and maximum energy product [(BH)ₘₐₓ] of 32.25 MGOe.

**TAB.1 XRF results of the pretreatment powders (Example 1)**

| **Element** | **Content Cwt.%)** | **Element** | **Content (wt.%)** |
|---|---|---|---|
| Fe | 67.3135 | Al | 0.2339 |
| Nd | 20.6406 | Si | 0.2044 |
| Pr | 6.4564 | Nb | 0.1916 |
| Dy | 2.5889 | Ga | 0.1667 |
| Co | 1.1343 | S | 0.0656 |
| Na | 0.3221 | Zr | 0.0531 |
| Ho | 0.2905 | Ca | 0.053 |
| Cu | 0.2837 | W | 0.0018 |

**TAB.2 XRF results of the pretreatment powders (Example 2)**

| **Element** | **Content Cwt.%)** | **Element** | **Content (wt.%)** |
|---|---|---|---|
| Fe | 67.7794 | Al | 0.2209 |
| Nd | 20.5665 | Nb | 0.1953 |
| Pr | 6.5391 | Ga | 0.1781 |
| Dy | 2.4912 | Si | 0.1389 |
| Co | 1.1563 | Ca | 0.0609 |
| Cu | 0.3022 | Zr | 0.0441 |
| Ho | 0.2975 | S | 0.0296 |

**TAB.3 XRF results of the pretreatment powders (Example 3)**

| **Element** | **Content Cwt.%)** | **Element** | **Content (wt.%)** |
|---|---|---|---|
| Fe | 66.9291 | Al | 0.2381 |
| Nd | 20.6427 | Si | 0.2093 |
| Pr | 6.5183 | Nb | 0.1873 |
| Dy | 2.4626 | Ga | 0.1598 |
| Co | 1.1642 | Ca | 0.0567 |
| Tb | 0.7997 | Zr | 0.0544 |
| Ho | 0.2820 | S | 0.0256 |
| Cu | 0.2702 | | |

**TAB.4 XRF results of the pretreatment powders (Example 4)**

| **Element** | **Content Cwt.%)** | **Element** | **Content (wt.%)** |
|---|---|---|---|
| Fe | 66.3840 | Ho | 0.2898 |
| Nd | 20.9083 | Si | 0.2554 |
| Pr | 6.6052 | Al | 0.2425 |
| Dy | 2.5265 | Nb | 0.1867 |
| Co | 1.1398 | Ga | 0.1781 |
| Tb | 0.8582 | Ca | 0.0611 |
| Cu | 0.3107 | Zr | 0.0538 |

## Claims

1. A process preparation technology of sintered NdFeB magnets from NdFeB sludge. The method of the present invention comprises the following steps: water bath distillation of sludge, ultrasonic cleaning, calcium reduction and diffusion, ultrasonic rinsing in a magnetic field, drying, powders mixing and sintering:
(1) Water bath distillation of sludge: Distilled water was added into the sludge and stirred. Subsequently, water bath distillation with stepwise increasing temperature in vacuum was carried out until the internal liquid had evaporated to obtain the powders. The operation was repeated for 3 times;
(2) Ultrasonic cleaning for sludge: The distillation powders after step (1) were washed for 3 times by acetone in an ultrasonic vessel, followed by cleaning by ethanol in the ultrasonic vessel. After removing the liquid, the wet powders were dried to get the pretreatment powders;
(3) Calcium reduction-diffusion: The pretreatment powders after step (2) with appropriate amounts of Nd₂O₃, FeB, and CaH₂ as the reactant, and CaO as a dispersant were used in the calcium reduction diffusion reaction; wherein the pretreatment powders after step (2) were analyzed by x-ray fluorescence (XRF). Based on XRF results and calculations in accordance with RE₂Fe₁₄B stoichiometric ratio, Nd₂O₃ was added to make sure that the amount of rare earth was 40 wt. % of the mixed powders of pretreatment powders, Nd₂O₃ and FeB; FeB was added to make sure that the amount of B in mixed powders of pretreatment powders, Nd₂O₃ and FeB was in excess 0-10 wt. % of that in the RE₂Fe₁₄B compound; The quantity of CaH₂ was 1.2-1.3 times as large as the mixed powders; The quantity of CaO was 50 wt. % of CaH₂, and wherein the reduction diffusion reaction condition was carried out at 1160-1240 °C for 60-150 min in inert gas;
(4) Rinsing and drying: The reducing product after step (3) was grinded, ultrasonically rinsed in a glass container in a magnetic field, and then dried;
(5) Mixing powders and sintering: the resulting recycled NdFeB powders after step (4) were milled down to 3-5 µm, doped by rare earth hydride nanoparticles of 10-20 wt. %, and mixed; subsequently pressed and aligned in a magnetic field to obtain the compact. The green compact was first dehydrogenated at 900-1000 °C for 30-180 min, and then sintered at 1050-1150 °C for 120-240 min, and finally annealed at 850-950 °C for 60-180 min and 450-550 °C for 60-180 min, respectively. The recycled sintered magnets were thus obtained.

2. A process preparation technology of sintered NdFeB magnets from the NdFeB sludge as described in claim 1, stated that the optimized volume ratio of 1:15 between sludge and distilled water, water bath distillation with stepwise increase in temperature in vacuum was carried out to obtain the powders. The optimized procedure started from 30 °C to 80 °C with increments of 5 °C in intervals of 5-10 min until the internal liquid had evaporated. The operation was repeated for 3 times.

3. A process preparation technology of sintered NdFeB magnets from the NdFeB sludge as described in claim 1, stated that the optimized ratio of powders, acetone and ethanol was 5 g, 10 ml and 10 ml, respectively.

4. A process preparation technology of sintered NdFeB magnets from the NdFeB sludge as described in claim 1, stated that the reducing product was ultrasonically rinsed for 3 times with 15% glycerol aqueous solution in a magnetic field of 0.1-0.5 T and, then rinsed with water until the pH value of supernatant reached 8-10, and finally was washed by ethanol and ether for 15 min, respectively. After rinsing, the product was dried in a vacuum of 10⁻³ Pa at 400 °C for 120 min to obtain the recycled NdFeB powders with particle sizes of about 10 µm.

5. A process preparation technology of sintered NdFeB magnets from the NdFeB sludge as described in claim 4, stated that the optimized every rinsing time was 15 min.

6. A process preparation technology of sintered NdFeB magnets from the NdFeB sludge as described in claim 1, stated that the hydrides were hydrogenated neodymium, hydrogenated praseodymium, hydrogenated dysprosium, or hydrogenated terbium.

## Patentansprüche

1. Verfahrensherstellungstechnologie von gesinterten NdFeB-Magneten aus NdFeB-Schlamm. Das Verfahren der vorliegenden Erfindung umfasst die folgenden Schritte: Wasserbaddestillation von Schlamm, Ultraschallreinigen, Calcium-Reduktion und Diffusion, Ultraschallspülen in einem magnetischen Feld, Trocknen, Pulvermischen und Sintern:
(1) Wasserbaddestillation von Schlamm: Destilliertes Wasser wurde in den Schlamm gegeben und gerührt. Nachfolgend wurde Wasserbaddestillation mit schrittweisem Erhöhen der Temperatur im Vakuum durchgeführt, bis die innere Flüssigkeit verdampft war, um die Pulver zu erhalten. Der Arbeitsgang wurde 3-mal wiederholt;
(2) Ultraschallreinigen für Schlamm: Die Destillationspulver nach Schritt (1) wurden in einem Ultraschallgefäß 3-mal mittels Aceton gewaschen, gefolgt vom Reinigen mittels Ethanol im Ultraschallgefäß. Nach dem Entfernen der Flüssigkeit wurden die feuchten Pulver getrocknet, um die Vorbehandlungspulver zu gewinnen;
(3) Calcium-Reduktion-Diffusion: Die Vorbehandlungspulver nach Schritt (2) mit zweckmäßigen Mengen von Nd₂O₃, FeB und CaH₂ als dem Reaktanten und CaO als einem Dispergiermittel wurden in der Calcium-Reduktion-Diffusions-Reaktion benutzt; wobei die Vorbehandlungspulver nach Schritt (2) mittels Röntgenfluoreszenz (RFA) analysiert wurden. Basiert auf RFA-Ergebnissen und Berechnungen gemäß dem stöchiometrischen RE₂Fe₁₄B-Verhältnis wurde Nd₂O₃ zugegeben, um sicherzustellen, dass die Menge an Seltener Erde 40 Gew.-% der gemischten Pulver der Vorbehandlungspulver, Nd₂O₃ und FeB betrug; FeB wurde zugegeben, um sicherzustellen, dass die Menge von B in den gemischten Pulvern der Vorbehandlungspulver, Nd₂O₃ und FeB mehr als 0 bis 10 Gew.-% derjenigen in der RE₂Fe₁₄B-Verbindung betrug; die Menge von CaH₂ war 1,2- bis 1,3-mal so groß wie die gemischten Pulver; die Menge von CaO betrug 50 Gew.-% von CaH₂, und wobei die Reaktionsbedingung der Reduktion-Diffusion bei 1.160 bis 1.240 °C für 60 bis 150 min in Inertgas durchgeführt wurde;
(4) Spülen und Trocknen: Das reduzierende Produkt nach Schritt (3) wurde zerkleinert, in einem Glasgefäß in einem magnetischen Feld ultraschallgespült und dann getrocknet;
(5) Mischen von Pulvern und Sintern: Die resultierenden rezyklierten NdFeB-Pulver nach Schritt (4) wurden auf 3 bis 5 µm hinab gemahlen, mittels Nanopartikeln von Seltenerdhydrid von 10 bis 20 Gew.-% dotiert und gemischt; nachfolgend in einem magnetischen Feld gepresst und ausgerichtet, um den Pressling zu erhalten. Der Grünkörper wurde zuerst während 30 bis 180 min bei 900 bis 1.000 °C dehydriert und dann während 120 bis 240 min bei 1.050 bis 1.150 °C gesintert und abschließend während 60 bis 180 min bei 850 bis 950 °C beziehungsweise während 60 bis 180 min bei 450 bis 550 °C geglüht. Die rezyklierten gesinterten Magnete wurden so erhalten.

2. Verfahrensherstellungstechnologie von gesinterten NdFeB-Magneten aus dem NdFeB-Schlamm wie in Anspruch 1 beschrieben, angegeben dadurch, dass das optimierte Volumenverhältnis von 1:15 zwischen Schlamm und destilliertem Wasser betrug, die Wasserbaddestillation mit schrittweiser Erhöhung der Temperatur im Vakuum durchgeführt wurde, um die Pulver zu erhalten. Die optimierte Verfahrensweise ging von 30 °C aus bis 80 °C mit Inkrementen von 5 °C in Intervallen von 5 bis 10 min, bis die innere Flüssigkeit verdampft war. Der Arbeitsgang wurde 3-mal wiederholt.

3. Verfahrensherstellungstechnologie von gesinterten NdFeB-Magneten aus dem NdFeB-Schlamm wie in Anspruch 1 beschrieben, angegeben dadurch, dass das optimierte Verhältnis von Pulvern, Aceton und Ethanol 5 g, 10 ml beziehungsweise 10 ml betrug.

4. Verfahrensherstellungstechnologie von gesinterten NdFeB-Magneten aus dem NdFeB-Schlamm wie in Anspruch 1 beschrieben, angegeben dadurch, dass das reduzierende Produkt 3-mal mit 15%-iger wässriger Glycerinlösung in einem magnetischen Feld von 0,1 bis 0,5 T ultraschallgespült, dann mit Wasser gespült wurde, bis der pH-Wert des Überstandes 8 bis 10 erreichte, und abschließend 15 min lang mittels Ethanol beziehungsweise Ether gewaschen wurde. Nach dem Spülen wurde das Produkt in einem Vakuum von 10⁻³ Pa während 120 min bei 400 °C getrocknet, um die rezyklierten NdFeB-Pulver mit Partikelgrößen von etwa 10 µm zu erhalten.

5. Verfahrensherstellungstechnologie von gesinterten NdFeB-Magneten aus dem NdFeB-Schlamm wie in Anspruch 4 beschrieben, angegeben dadurch, dass jede optimierte Spüldauer 15 min betrug.

6. Verfahrensherstellungstechnologie von gesinterten NdFeB-Magneten aus dem NdFeB-Schlamm wie in Anspruch 1 beschrieben, angegeben dadurch, dass die Hydride hydriertes Neodym, hydriertes Praseodym, hydriertes Dysprosium oder hydriertes Terbium waren.

## Revendications

1. Technologie de préparation de traitement d'aimants NdFeB frittés à partir d'une boue de NdFeB, le procédé de la présente invention comprenant les étapes suivantes : la distillation de la boue dans un bain d'eau, le nettoyage par ultrasons, la réduction et la diffusion de calcium, le rinçage par ultrasons dans un champ magnétique, le séchage, le mélange de poudres et le frittage :
(1) la distillation de la boue dans un bain d'eau : de l'eau distillée est ajoutée dans la boue et est mélangée, puis la température de la distillation de bain d'eau est progressivement augmentée sous vide jusqu'à l'évaporation du liquide interne pour obtenir les poudres, et l'opération est répétée trois fois ;
(2) le nettoyage par ultrasons de la boue : les poudres de distillation découlant de l'étape (1) sont lavées trois fois à l'acétone dans un récipient à ultrasons, puis elles sont nettoyées à l'éthanol dans le récipient à ultrasons ; après l'enlèvement du liquide, les poudres humides sont séchées pour obtenir les poudres de prétraitement;
(3) la réduction et la diffusion de calcium : les poudres de prétraitement découlant de l'étape (2) avec des quantités appropriées de Nd₂O₃, FeB et CaH₂ en tant que réactif, et de CaO en tant que dispersant, sont utilisées dans la réaction de réduction et de diffusion de calcium ; les poudres de prétraitement découlant de l'étape (2) sont analysées par fluorescence à rayons X (XRF) ; sur la base des résultats de la XRF et de calculs de rapport stoechiométrique de RE₂Fe₁₄B, du Nd₂O₃ est ajouté pour s'assurer que la quantité de terres rares est égale à 40 % en poids des poudres mélangées des poudres de traitement, de Nd₂O₃ et de FeB ; du FeB est ajouté pour s'assurer que la quantité de B dans les poudres mélangées des poudres de traitement, de Nd₂O₃ et de FeB dépasse de 0 à 10 % en poids celle du composé de RE₂Fe₁₄B; la quantité de CaH₂ est égale à 1,2 à 1,3 fois celle des poudres mélangées ; la quantité de CaO est égale à 50 % en poids de celle de CaH_{2;} et la condition de réaction de réduction et de diffusion est effectuée à 1160 à 1240°C pendant 60 à 150 minutes en gaz inerte ;
(4) le rinçage et le séchage : le produit de réduction découlant de l'étape (3) est moulu, rincé par ultrasons dans un récipient en verre dans un champ magnétique, puis séché ;
(5) le mélange des poudres et le frittage : les poudres de NdFeB recyclées découlant de l'étape (4) sont broyées à 3 à 5 µm, dopées en nanoparticules hybrides de terres rares de 10 à 20 % en poids et mélangées ; puis elles sont pressées et alignées dans un champ magnétique pour obtenir le compact ; le compact vert est d'abord déshydrogéné à 900 à 1000°C pendant 30 à 180 minutes, puis fritté à 1050 à 1150°C pendant 120 à 240 minutes, et enfin recuit respectivement à 850 à 950°C pendant 60 à 180 minutes et à 450 à 550°C pendant 60 à 180 minutes ; les aimants frittés recyclés sont ainsi obtenus.

2. Technologie de préparation de traitement d'aimants NdFeB frittés à partir de la boue de NdFeB selon la revendication 1, dans laquelle, pour un rapport de volume optimisé de 1:15 entre la boue et l'eau distillée, la distillation dans un bain d'eau avec augmentation progressive de la température sous vide est effectuée pour obtenir les poudres ; la procédure optimisée commence de 30°C à 80°C par incrément de 5°C dans des intervalles de 5 à 10 minutes jusqu'à l'évaporation du liquide interne ; l'opération est répétée trois fois.

3. Technologie de préparation de traitement d'aimants NdFeB frittés à partir de la boue de NdFeB selon la revendication 1, dans laquelle, avec le rapport optimisé de poudres, l'acétone et l'éthanol sont respectivement de 5 g, 10 ml et 10 ml.

4. Technologie de préparation de traitement d'aimants NdFeB frittés à partir de la boue de NdFeB selon la revendication 1, dans laquelle le produit de réduction est rincé par ultrasons trois fois avec une solution aqueuse à 15 % de glycérol dans un champ magnétique de 0,1 à 0,5 T, puis rincé à l'eau jusqu'à ce que la valeur de pH du surnageant atteigne 8 à 10, et enfin lavé respectivement à l'éthanol et à l'éther pendant 15 minutes; après le rinçage, le produit est séché à une dépression de 10⁻³ Pa à 400°C pendant 120 minutes pour obtenir les poudres de NdFeB recyclées avec des tailles de particules d'environ 10 µm.

5. Technologie de préparation de traitement d'aimants NdFeB frittés à partir de la boue de NdFeB selon la revendication 4, dans laquelle chaque temps de rinçage optimisé est de 15 minutes.

6. Technologie de préparation de traitement d'aimants NdFeB frittés à partir de la boue de NdFeB selon la revendication 1, dans laquelle les hybrides sont du néodyme hydrogéné, du praséodyme hydrogéné, du dysprosium hydrogéné ou du terbium hydrogéné.
